# EUROPÄISCHE PATENTANMELDUNG

(11) **EP 0 875 276 A2**
(43) Veröffentlichungstag der Anmeldung: **04.11.1998**
(21) Anmeldenummer: 98104885.3
(22) Anmeldetag: 18.03.1998
(51) Int. Cl.: B01D 53/00

(54) **Verfahren zur Reduzierung der in Zementklinker-Brennanlagen anfallenden Chloridverbindungen**

(30) Priorität: 29.04.1997 DE 19718017
(71) Anmelder: Maury, Hans-Dietmar Dr.rer.nat., D-59227 Ahlen (DE)
(72) Erfinder: Maury, Hans-Dietmar, Dr. rer. nat., 59227 Ahlen (DE); Kraft, Bernold, Dipl.-Inform., 59227 Ahlen (DE)
(74) Vertreter: Stenger, Watzke & Ring Patentanwälte

(57) **Zusammenfassung**

Vorgeschlagen wird ein Verfahren zur Reduzierung der in Zementklinker-Brennanlagen anfallenden Chloridverbindungen. Das Verfahren umfaßt die folgenden Verfahrensschritte:
a) Abzug zumindest eines Teils der chloridhaltigen Gase aus dem Ofenraum,
b) Führung der Gase zu einem Kondensator, hierbei Aufrechterhaltung der Gastemperatur auf einem Wert oberhalb der Kondensationstemperatur der Chloridverbindungen,
c) Abkühlung der Chloridverbindungen an gekühlten Kondensationsflächen bis auf einen Wert unterhalb der Kondensationstemperatur,
d) Abführung der gereinigten Gase aus dem Kondensator,
e) Reinigung der Kondensationsflächen von den daran kondensierten Chloridkristallen und Austrag der Chloridkristalle aus dem Kondensator.
Durch Einsatz des vorgeschlagenen Verfahrens lassen sich bei der Herstellung normalen sowie alkaliarmen Zementes auch solche preiswerten Roh- und Brennstoffe einsetzen, die einen überdurchschnittlich hohen Chloridgehalt aufweisen.

## Beschreibung

Die Erfindung betrifft ein Verfahren zur Reduzierung der in Zementklinker-Brennanlagen anfallenden Chloridverbindungen. Ein grundsätzliches betriebstechnisches Problem von Zementklinker-Brennanlagen sind die in den Brennraum eingetragenen Chlorverbindungen sowohl aus den Rohstoffen als auch aus den Brennstoffen. Die Chlorverbindungen setzen sich bei Unterschreitung ihrer Kondensationstemperatur ab und können auf diese Weise zu Betriebsstörungen in der Anlage führen. Chloreinträge sind insbesondere bei der Herstellung von Zementen mit niedrigem Alkaligehalt nachteilig. Derartige Zemente werden daher ausschließlich unter Verwendung von Roh- und Brennstoffen mit niedrigen Chloridgehalten hergestellt. Zur Reduzierung der Betriebskosten wird angestrebt, auch Roh- und Brennstoffe mit höheren Chloridgehalten sowohl für die Herstellung von Zementen normaler Qualitäten als auch für die Erzeugung von alkaliarmen Zementen ("low alkali cement") einzusetzen. Erst auf diese Weise läßt sich auch Abfall in höheren Anteilen als bisher als Sekundär-Brennstoff einsetzen.

Bei Zementklinker-Brennverfahren mit erhöhten Chloridgehalten ist es bereits bekannt, Bypass-Systeme zu installieren, mit denen sich zwar Betriebsstörungen verringern lassen, wie sie durch die inneren Kreisläufe im Ofen-Wärmetauscher-System verursacht werden, die aber andere Nachteile mit sich bringen. Zum einen erhöhen Bypass-Systeme den spezifischen Energiebedarf der Anlage. Zum anderen können aus Qualitätsgründen die anfallenden Staubmengen dem Endprodukt Zement nicht wieder zugesetzt werden, so daß oft eine Deponierung der anfallenden großen Staubmengen in Steinbrüchen oder zunehmend auch in geordneten Hausmülldeponien erforderlich wird. Für die Verarbeitung hochchlorider Stäube mit einem Gewichtsanteil der Chloridverbindungen von mehr als 20 % sowie für die Herstellung besonders alkaliarmer Zemente sind die herkömmlichen Bypass-Systeme daher nicht einsetzbar.

Der Erfindung liegt die **Aufgabe** zugrunde, ein Verfahren zur Reduzierung der in Zementklinker-Brennanlagen anfallenden Chloridverbindungen zu schaffen, welches es erlaubt, bei der Herstellung normalen sowie alkaliarmen Zements auch preiswerte Roh- und Brennstoffe einzusetzen, die einen überdurchschnittlich hohen Chloridgehalt aufweisen.

Zur **Lösung** dieser Aufgabe wird ein Verfahren mit den folgenden Verfahrensschritten vorgeschlagen:
a) Abzug zumindest eines Teils der chloridhaltigen Gase aus dem Ofenraum,
b) Führung der Gase zu einem Kondensator, hierbei Aufrechterhaltung der Gastemperatur auf einem Wert oberhalb der Kondensationstemperatur der Chloridverbindungen,
c) Abkühlung der Chloridverbindungen an gekühlten Kondensationsflächen des Kondensators bis auf einen Wert unterhalb der Kondensationstemperatur,
d) Abführung der gereinigten Gase aus dem Kondensator, vorzugsweise anschließende Rückführung der Gase in den Ofenraum,
e) kontinuierliche oder diskontinuierliche Reinigung der Kondensationsflächen von den daran kondensierten Chloridkristallen und Austrag der Chloridkristalle aus dem Kondensator.

Erfindungsgemäß werden also zunächst zumindest Teile der chloridhaltigen Gase aus dem Ofenraum abgezogen. Dies erfolgt an geeigneter Stelle des Ofenraums zwischen dem Sinter- und dem Calcinierbereich. Die Temperatur des Gases liegt hier im Bereich von 900 bis 1.200 °C, vorzugsweise bei etwa 1.100 °C. Die abgezogenen, stark chloridhaltigen Gase werden anschließend zu einem Kondensator geführt, wobei durch geeignete Mittel die Gastemperatur auf einem Wert oberhalb der Kondensationstemperatur aufrechterhalten werden muß. Vorzugsweise sollte die Temperatur beim Eintritt in den Kondensator daher nicht unter 850 °C liegen. Sodann werden die Chloridverbindungen an gekühlten Kondensationsflächen des Kondensators bis auf einen Wert unterhalb der Kondensationstemperatur abgekühlt. Die Chloridverbindungen kristallisieren hierbei unmittelbar an den Kondensationsflächen, deren Oberflächentemperaturen durch Verwendung eines geeigneten Kühlmediums im Bereich zwischen 300 und 400 °C liegen sollten. Erfindungsgemäß wird daher die Abscheidung der Chlorverbindungen über einen großen Temperaturgradienten herbeigeführt. Dieser Temperaturgradient zwischen der Gastemperatur und der Temperatur an den relativ kalten Kondensationsflächen beträgt zwischen 700 und 800 °C, was zu einer nahezu schlagartigen Kristallisation der Chloridteilchen an den Kondensationsflächen führt.

Die gereinigten Gase werden anschließend aus dem Kondensator abgeführt, vorzugsweise über eine mittelbar oder unmittelbar in den Ofenraum führende Rückführleitung. Um die an den Kondensationsflächen eine Kruste bildenden Chloridkristalle zu lösen, erfolgt schließlich eine kontinuierliche oder diskontinuierliche Reinigung der Kondensationsflächen. Die so abgelösten Choridkristalle lassen sich dann aus dem Kondensator austragen, in geeigneter Weise deponieren oder in speziellen Produkten verwenden.

Vorteilhafte Ausgestaltungen des erfindungsgemäßen Verfahrens sind Gegenstand der abhängigen Patentansprüche.

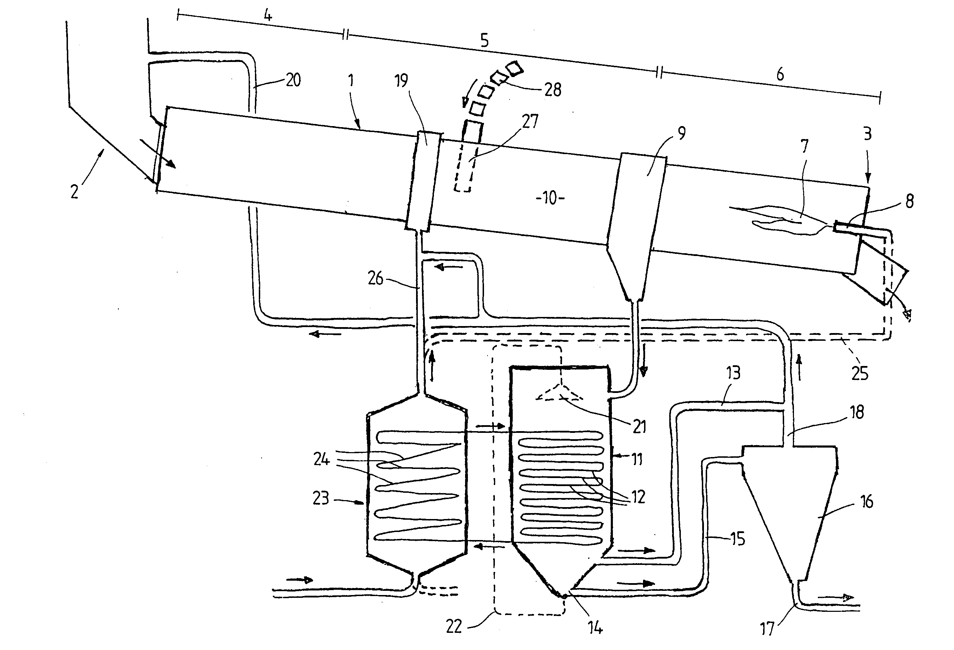

Nachfolgend erfolgt die Erläuterung des Verfahrens anhand eines auf der beigefügten Zeichnung dargestellten Ausführungsbeispieles einer Zementklinker-Brennanlage. Es handelt sich um eine vereinfachte Darstellung, die in erster Linie das grundsätzliche Schema einer derartigen Anlage wiedergeben soll.

Die auf der Zeichnung dargestellte Zementklinker-Brennanlage verwendet als Brennraum einen langen Drehrohrofen 1, der in üblicher Weise um seine eigene Achse drehbar gelagert und mit leichter Neigung angeordnet ist, so daß das über den Einlauf 2 zugeführte Rohmehl kontinuierlich entlang der Mantelfläche des Drehrohres 1 zu dessen brennerseitigem Ende 3 transportiert wird. In üblicher Weise setzt sich die Länge des Drehrohres 1 aus einer Trocknungs- und Aufwärmzone 4, einer Calcinierzone 5 und einer Sinterzone 6 zusammen. In die Sinterzone 6 tritt die Flamme 7 eines Brenners 8 ein. Dieser kann mit dem Primärbrennstoff Öl, Kohle oder Gas, jedoch auch mit Sekundärbrennstoffen aus Abfall betrieben werden.

Wenn die Erfindung im vorliegenden Fall auch anhand eines Drehrohrofens erläutert wird, soll dies nicht als Beschränkung angesehen werden. Das erfindungsgemäße Verfahren ist in gleicher Weise auch in Verbindung mit einem mit Wärmetauschern arbeitenden Calcinier- und Sinterofen durchführbar.

Die dargestellte Anlage eignet sich dazu, Roh- und Brennstoffe mit relativ hohen Chloridgehalten zu verwenden. Ursächlich hierfür kann z. B. die Zusammensetzung des Brennstoffes sein. Sofern mit dem Brenner 8 ausschließlich Öl verfeuert wird, sind die Chloridgehalte in dem sich bildenden Gas relativ gering. Würden zur Verbrennung jedoch Sekundär-Brennstoffe aus Abfall mit herangezogen, kann der Anteil der in dem Gas gelösten Chloridverbindungen stark ansteigen. Zumindest ein Teil des diese Chlorverbindungen enthaltenden Gases wird mittels des zwischen Calcinierzone 5 und Sinterzone 6 angeordneten Abzuges 9 aus dem Ofenraum 10 abgezogen. Die Temperatur der Gase beträgt dabei etwa 1.100 °C. Die Gase gelangen dann auf kürzestem Wege in einen Kondensator 11 und durchströmen diesen von oben nach unten. In dem Kondensator 11 befinden sich Kondensationsflächen 12, die von einem Kühlmedium auf eine Temperatur zwischen 300 und 400 °C oder niedriger gehalten werden. Beim Überstreichen der Kondensationsflächen 12 durch das durch den Kondensator 11 hindurchgeführte Gas kristallisieren die Chloridverbindungen unmittelbar an den Kondensationsflächen 12. Dieser Prozeß erfolgt nahezu schlagartig, da der Temperaturgradient zwischen den mit einer Temperatur von mindestens 850 °C in den Kondensator 11 eintretenden Gasen und der Temperatur der Kondensationsflächen 700 bis 800 °C beträgt.

Die gereinigten Gase treten am unteren Ende aus dem Gehäuse des Kondensators aus und gelangen über die Leitung 13 zurück in den Brennraum 10. Ebenfalls am unteren Ende des Kondensatorgehäuses ist ein Austritt 14 für die Stäube sowie die aus kristallisierten, ebenfalls staubförmigen Chloridverbindungen angeordnet. Diese gelangen über eine Leitung 15 in einen Abscheider 16, der beim Ausführungsbeispiel als Zyklon ausgebildet ist. Als Festgutaustrag 17 verläßt den Abscheider 16 hochkonzentrierter Chloridstaub. Die Gasanteile verlassen den Abscheider 16 über das Tauchrohr bei 18 und gelangen auf diese Weise über die Verlängerung der Leitung 13 zurück in den Ofenraum 10 der Anlage.

Für die Rückführung der gereinigten Gase sind auf der Zeichnung zwei Alternativen dargestellt. Bei der ersten Alternative gelangen die Gase über eine das Drehrohr 1 umgebende Einspeisung 19 zurück in den Ofenraum 10. Alternativ können die gereinigten Gase über eine weitere Leitung 20 dem Ofenauslauf zugeführt werden.

Das Kristallisieren der Chloridverbindungen unmittelbar an den Kondensationsflächen 12 führt dort zu einem fortlaufenden Aufbau von Kristallschichten. Zur Reinigung ist der Kondensator 11 mit einem Kugelregen-Reinigungssystem versehen, bei dem Metallkugeln mittels eines oberhalb der Kondensationsflächen 12 angeordneten Kugelverteilers 21 in dem Kondensatorraum verteilt werden. Die Kugeln prallen auf die Kondensationsflächen 12 und reinigen diese auf mechanischem Wege, wobei die festen Chloridpartikel infolge Schwerkraft und Gasströmung nach unten in Richtung auf den Austritt 14 fallen. Gleiches gilt für die Kugeln, welche nahe des Austritts 14 ausgesiebt und mittels eines Kugelförderers 22 im Kreislauf zurück zu dem Kugelverteiler 21 transportiert werden. Infolge der mechanischen Einwirkung durch die Kugeln setzen sich die Chloridkristalle in weitgehend pulverförmigem Zustand nahe des Austritts 14 ab, und werden von dort aus mit den übrigen Stäuben zu dem Abscheider 16 transportiert.

Zur Aufnahme der in dem Kondensator 11 anfallenden Kondensationswärme ist ein Wärmetauscher 23 vorgesehen. Dieser wird als Primärmedium von Luft oder alternativ auch von Öl durchströmt. Durch Wärmetauscherflächen 24 des Wärmetauschers 23 strömt ein Sekundärmedium, vorzugsweise Thermoöl mit einem Siedepunkt bis zu 500 °C, welches in einem Kreislauf zugleich die Kondensationsflächen 12 des Kondensators 11 durchströmt und die Kondensationsflächen 12 auf 300 bis 400 °C kühlt. Die auf diese Weise in dem Kondensator 11 an das Sekundärmedium übertragene Wärme wird in dem Wärmetauscher 23 an die durchgeführte Luft oder das durchgeführte Öl übertragen und dieses Primärmedium aufgeheizt.

Auf diese Weise kann die in dem Wärmetauscher 23 anfallende Wärme dazu genutzt werden, das dem Brenner 8 zugeführte Öl vorzuheizen, wozu eine Ölleitung 25 von dem Wärmetauscher 23 zu dem Brenner 8 führt.

Alternativ kann als Primärmedium Luft durch den Wärmetauscher 23 geführt werden, die dann über die Luftleitung 26 und die Einspeisung 19 als vorgeheizte Sekundärbrennluft in den Brennraum 10 gelangt. Die Einspeisung 19 befindet sich hierzu in der Calcinierzone 5 des Drehrohres und vorzugsweise nahe an einem zusätzlichen Brennstoffeintrag 27. Über den Brennstoffeintrag 27 läßt sich blockförmig gepreßter Müll 28 als Sekundärbrennstoff unmittelbar in die Calcinierzone 5 des Drehrohres einschleusen. In grundsätzlicher Bauart ist ein derartiger Brennstoffeintrag 27 in der US-Patentschrift 4,850,290 beschrieben. Ausführungsbeispiele für einen ringförmig das Drehrohr umgebenden Abzug 9 sowie eine ebenfalls ringförmig das Drehrohr umgebende Einspeisung 19 sind in der US-Patentschrift 5,454,715 beschrieben und bedürfen daher hier keiner näheren Erläuterung.

Soweit in den über den Abzug 9 aus dem Brennraum entfernten Gasen Stäube aus dem Calcinier- bzw. Sinterprozeß enthalten sind, werden diese ebenfalls durch den Kondensator 11 und über die Kondensationsflächen 12 geführt. Diese Stäube sammeln sich zusammen mit den ebenfalls staubförmigen Chloridkristallen am unteren Austritt 14 des Kondensators 11 und fallen in dem anschließenden Abscheider 16 als Festgutaustrag 17 an. Bei diesem Festgutaustrag handelt es sich daher um einen hochkonzentrierten Chloridstaub mit einem Gewichtsanteil der Chloridverbindungen an der Gesamtstaubmenge von mindestens 20 %.

### Bezugszeichenliste

- 1: Drehrohr
- 2: Einlauf
- 3: brennerseitiges Ende
- 4: Trocknungs- und Aufwärmzone
- 5: Calcinierzone
- 6: Sinterzone
- 7: Flamme
- 8: Brenner
- 9: Abzug
- 10: Ofenraum
- 11: Kondensator
- 12: Kondensationsflächen
- 13: Leitung
- 14: Austritt
- 15: Leitung
- 16: Abscheider
- 17: Festgutaustrag
- 18: Tauchrohr
- 19: Einspeisung
- 20: weitere Leitung
- 21: Kugelverteiler
- 22: Kugelförderer
- 23: Wärmetauscher
- 24: Wärmetauscherfläche
- 25: Ölleitung
- 26: Luftleitung
- 27: Brennstoffeintrag
- 28: Abfall

## Patentansprüche

1. Verfahren zur Reduzierung der in Zementklinker-Brennanlagen anfallenden Chloridverbindungen, mit den folgenden Verfahrensschritten:
a) Abzug zumindest eines Teils der chloridhaltigen Gase aus dem Ofenraum (10),
b) Führung der Gase zu einem Kondensator (11), hierbei Aufrechterhaltung der Gastemperatur auf einem Wert oberhalb der Kondensationstemperatur der Chloridverbindungen,
c) Abkühlung der Chloridverbindungen an gekühlten Kondensationsflächen (12) des Kondensators (11) bis auf einen Wert unterhalb der Kondensationstemperatur,
d) Abführung der gereinigten Gase aus dem Kondensator (11), vorzugsweise anschließende Rückführung der Gase in den Ofenraum (10),
e) kontinuierliche oder diskontinuierliche Reinigung der Kondensationsflächen (12) von den daran kondensierten Chloridkristallen und Austrag der Chloridkristalle aus dem Kondensator (11).

2. Verfahren nach Anspruch 1, dadurch gekennzeichnet, daß als die Kondensationswärme aufnehmendes Medium Öl verwendet wird, welches anschließend dem Brenner (8) als Primärbrennstoff zur Heizung des Ofenraums (10) zugeführt wird.

3. Verfahren nach Anspruch 1, dadurch gekennzeichnet, daß als die Kondensationswärme aufnehmendes Medium Luft verwendet wird, welche anschließend dem Ofenraum (10) als Sekundär-Verbrennungsluft zugeführt wird.

4. Verfahren nach Anspruch 3, dadurch gekennzeichnet, daß die Zuführung der aufgewärmten Luft im Bereich eines in den Ofenraum (10) führenden Brennstoffeintrags (27) für Sekundärbrennstoffe erfolgt.

5. Verfahren nach Anspruch 4, gekennzeichnet durch Sekundärbrennstoff aus Abfall.

6. Verfahren nach einem der Ansprüche 2 bis 5, dadurch gekennzeichnet, daß das die Kondensationswärme aufnehmende Medium in indirektem Wärmeaustausch mit einem Sekundärmedium steht, welches die Kondensationsflächen (12) des Kondensators (11) durchströmt und kühlt.

7. Verfahren nach Anspruch 6, gekennzeichnet durch ein Thermoöl mit einem Siedepunkt von bis zu 500 °C als Sekundärmedium.

8. Verfahren nach Anspruch 1, dadurch gekennzeichnet, daß die gereinigten Gase unmittelbar in den Ofenraum (10) zurückgeführt werden.

9. Verfahren nach Anspruch 1, dadurch gekennzeichnet, daß die gereinigten Gase über eine Bypass-Leitung (20) dem Ofenauslauf zugeführt werden.

10. Verfahren nach einem vorangehenden Ansprüche, dadurch gekennzeichnet, daß der Kondensator (11) mit einem mechanisch arbeitenden Reinigungssystem versehen ist, vorzugsweise einem Kugelregen-Reinigungssystem mit Rücktransport der am unteren Ende des Kondensators (11) angesammelten Kugeln zu einem oberhalb der Kondensationsflächen (12) angeordneten Kugelverteiler (21).
